# EUROPÄISCHE PATENTSCHRIFT

(11) **EP 2 184 256 B1**
(45) Veröffentlichungstag und Bekanntmachung des Hinweises auf die Patenterteilung: **04.01.2012**
(21) Anmeldenummer: 09012962.8
(22) Anmeldetag: 14.10.2009
(51) Int. Cl.: B66F 9/12, B62B 3/06

(54) **Flurförderzeug mit einem Lastarm**
Industrial truck with a load arm
Chariot de manutention doté d'un bras de charge

(30) Priorität: 06.11.2008 DE 102008056244
(43) Veröffentlichungstag der Anmeldung: 12.05.2010
(73) Patentinhaber: Jungheinrich Aktiengesellschaft, 22047 Hamburg (DE)
(72) Erfinder: Magens, Ernst-Peter, 22949 Ammersbek (DE)
(74) Vertreter: Hauck Patent- und Rechtsanwälte

(56) Entgegenhaltungen:
- EP-A2- 0 958 988
- DE-A1- 19 639 736
- JP-A- 7 257 894
- US-A- 2 992 749

## Beschreibung

Die Erfindung bezieht sich auf ein Flurförderzeug nach dem Patentanspruch 1.

In der weltweiten Logistik haben sich Paletten als Ladehilfsmittel weitgehend durchgesetzt. In einzelnen Ländern sind die Abmessungen derartiger Paletten standardisiert (Europalette). Paletten werden vornehmlich von Flurförderzeugen, die mit Gabelzinken bzw. Gabelarmen ausgerüstet sind, transportiert und gestapelt. In bestimmten Einsatzfällen (z.B. im Einzelhandel) ist es sinnvoll, Lasten bzw. Waren auf kleineren Paletten zu transportieren, da die Waren auf den Paletten stehend direkt im Verkaufsraum aufgestellt werden. Um diese Artikel zumindest vom Hersteller bis zum Einzelhändler zu transportieren, hat es sich durchgesetzt, die kleineren Paletten so zu gestalten, dass sie jeweils die Hälfte, ein Drittel oder ein Viertel der Fläche einer großen Palette in Anspruch nehmen. Bei Lagerung in Regalen und beim Transport mit Standardflurförderzeugen werden zum Beispiel vier mit Ware beladene kleine Paletten auf eine große gestellt. Bis zur Anlieferung beim Einzelhandel kommen somit die Fahrzeuge zum Einsatz, die für große Paletten ausgelegt sind. Beim Einzelhändler müssen dann die kleineren Paletten von den großen heruntergenommen und in den Verkaufsraum gebracht werden. Da kleinere Paletten, insbesondere die Einviertelpaletten, nur eine mittlere Öffnung in Längsrichtung aufweisen, werden sie mit einem einzelnen Gabelarm transportiert, was entsprechend unsicher ist, da kleine Paletten oftmals in Relation zu ihrer Grundfläche hochbeladen sind. Bei Bedarf muss dann die Palette und/oder die darauf befindliche Ware zusätzlich von Hand abgestützt werden.

Aus DE 196 39 736 ist bekannt, die Breite von Lastarmen einer Traggabel durch ein Schwenkstück zu vergrößern, das nahe dem Gabelrücken auf dem Gabelarm schwenkbar gelagert ist. Das Schwenkstück wird über ein Bedienelement betätigt und setzt einen entsprechenden Freiraum einer Last - d.h. im Allgemeinen der Palette - voraus. Ist dieser nicht gegeben, kann nur der Freiraum innerhalb der beiden Öffnungen an der Palette benutzt werden. Die Auflagenverbreitung erstreckt sich bei weitem nicht bis zum äußeren Rand der Palette, sie dient vielmehr zur Zentrierung der Palette auf dem Gabelzinken.

Aus EP0958988A ist ein Flurförderzeug gemäss dem Oberbegriff des Anspruchs 1 bekannt.

Der Erfindung liegt die Aufgabe zugrunde, bei einem Flurförderzeug, dessen Lastteil einen mittigen höhenverstellbaren Lastarm aufweist, eine Verbreiterung der Auflagefläche zur Verfügung zu stellen, die sich zur Außenkante der Last hin erstreckt und die beim Aufnehmen bzw. Absetzen einer Palette automatisch betätigbar ist.

Diese Aufgabe wird durch die Merkmale des Patentanspruchs 1 gelöst.

Bei dem erfindungsgemäßen Flurförderzeug sind unterhalb der Deckenfläche des Lastarms und in Längsrichtung des Lastarms beabstandet an jeder Längsseite zwei flügelartige Elemente schwenkbar gelagert, die zwischen einer Ruheposition unterhalb der Deckenfläche und einer Außenposition, in der sie seitlich von dem Lastarm abstehen, bewegbar sind. Die jeweils auf einer Längsseite liegenden Elemente sind über Getriebemittel so gekoppelt, dass bei einer Verschwenkung des einen Elements eines Paares in seine Außenposition das andere in die Ruheposition verschwenkt wird und umgekehrt.

Bei der Erfindung sind von den Elementen zwei Kragarmpaare gebildet, nämlich eins auf der rechten und eins auf der linken Seite des Lastarms. Ein Kragarm eines Paares dient als Abstützelement für die Last, während der andere ein Betätigungselement für das Abstützelement ist. Die Kragarme eines Paares sind seitlich am senkrechten Schenkel des Lastarms gelagert, wenn der Lastarm U-förmigen Querschnitt aufweist. Die Kragarme bzw. Elemente stehen vorzugsweise über Lenker miteinander in Wirkverbindung. In den jeweiligen Endstellungen "Last aufgenommen" und "Last abgegeben" ist einer der Kragarme eines Paares herausgeschwenkt, während der andere eingeschwenkt ist (Abstützposition bzw. Ruheposition). Es versteht sich, dass die Position der Elemente an dem Lastarm und ihre Länge auf die aufzunehmende Last, d.h. die aufzunehmende Palette, abgestimmt sein muss. Die Betätigung der Elemente erfolgt durch die Füße einer Palette beim Einfahren in die zum Beispiel auf dem Boden abgestellte Palette oder beim Ausfahren aus der abgesetzten Palette.

Vorteilhafte Ausgestaltungen der Erfindung sind in Unteransprüchen angegeben.

Die Elemente können zum Beispiel um eine vertikale Achse schwenkbar gelagert und über eine Lenkerstange miteinander verbunden sein. In diesem Falle sind die Elemente als zweiarmige Hebel ausgebildet, wobei die Lenkerstange an einem Hebelarm angreift.

Nach einer weiteren Ausgestaltung der Erfindung ist eine Federanordnung vorgesehen, welche die Elemente in die jeweilige Ruhelage vorspannt. Hierzu sieht eine weitere Ausgestaltung der Erfindung vor, dass eine Druckfeder zwischen den zugekehrten Lenkerstangen angeordnet ist. Die Druckfeder kann zwischen einem Paar Schwenkarmen angeordnet sein, die um eine vertikale Achse schwenkbar gelagert sind und an den Lenkerstangen anliegen. Bei der Verschwenkung der Elemente bewegen sich die Lenkerstangen relativ zu den Außenkanten des Lastarms und haben den maximalen Abstand, wenn die Elemente etwa im Winkel von 45° zur Längsachse des Lastarms angeordnet sind. Werden die Abschnittselemente weiter verschwenkt oder zurückgeschwenkt, nähern sich die Lenkerstangen wiederum der Außenkante des Lastarms. Dadurch ist mit Hilfe einer einzigen Druckfeder möglich, die gewünschte Vorspannung zu erhalten.

Bei einem U-förmigen Profil für den Lastarm sind in den Schenkeln vorzugsweise Öffnungen eingeformt, über welche die Elemente den Lastarm einschwenken bzw. aus diesem heraus.

Nach einer weiteren Ausgestaltung der Erfindung weisen die Elemente eine konvexe Außenseite auf. Dadurch können sie leichter an den Füßen der Palette entlang gleiten und zum Beispiel weiter in den Lastarm eingeschwenkt werden, wenn sie zuvor nicht vollständig im Lastarm versenkt sind.

Durch Bremsen oder andere Auswirkungen kann die Palette auf dem Lastarm verrutschen. Um dadurch möglicherweise ein Einschwenken der Elemente zu vermeiden, sieht die Erfindung ein Betätigungselement vor, das etwas nach oben über die Deckenfläche des Lastarms nach oben steht und das mit Verriegelungsmitteln zusammenwirkt, die die Betätigung der Elemente blockieren. Erst wenn die Last vom Boden abgehoben ist und auf dem Lastarm aufliegt, kann eine Verschwenkung verhindert werden. Außerdem ist es möglich, Rastnasen an dem Lenkarm vorzusehen, die mit dem Betätigungselement in Wirkverbindung stehen, wenn dies durch die Last in die Deckenfläche gedrückt wird.

Ein Ausführungsbeispiel der Erfindung wird nachfolgend anhand von Zeichnungen näher erläutert.
- Fig. 1: zeigt eine. Draufsicht auf ein Flurförderzeug nach der Erfindung ohne Last,
- Fig. 2: zeigt eine Draufsicht auf das Flurförderzeug nach Figur 1 nach aufgenommener Palette,
- Fig. 3: zeigt die Seitenansicht des Flurförderzeugs nach Figur 1,
- Fig. 4: zeigt die Seitenansicht des Flurförderzeugs nach Figur 3 mit angehobener Palette,
- Fig. 5: zeigt einen Schnitt eines Lastarms des Flurförderzeugs nach den voranstehenden Figuren ohne aufgenommene Last entlang Linie 5-5,
- Fig. 6: zeigt die gleiche Ansicht wie Figur 5 mit aufgenommener Last,
- Fig. 7: zeigt einen Schnitt durch die Darstellung nach Figur 6 entlang der Linie E-F,
- Fig. 8: zeigt einen Schnitt durch die Darstellung nach Figur 5 entlang der Linie C-D,
- Fig. 9: zeigt eine ähnliche Darstellung wie Figur 6 mit einer anderen Form der Abstützelemente.
- Fig. 10a: zeigt einen Schnitt durch die Anordnung nach Figur 6 durch den Lastarm mit einem Betätigungselement für eine Verriegelungseinrichtung entlang der Linie 10a-10a.
- Fig. 10b: zeigt einen Teillängsschnitt durch den Lastarm nach Figur 10a entlang der Linie 10b-10b.
- Fig. 10c: zeigt einen Schnitt durch die Anordnung nach Figur 10b jedoch mit aufgenommener Last.
- Fig. 11: zeigt einen Schnitt durch die Anordnung nach Figur 10b entlang der Linie 11-11.
- Fig. 12: zeigt einen Schnitt entsprechend Figur 11 mit aufgenommener Last.

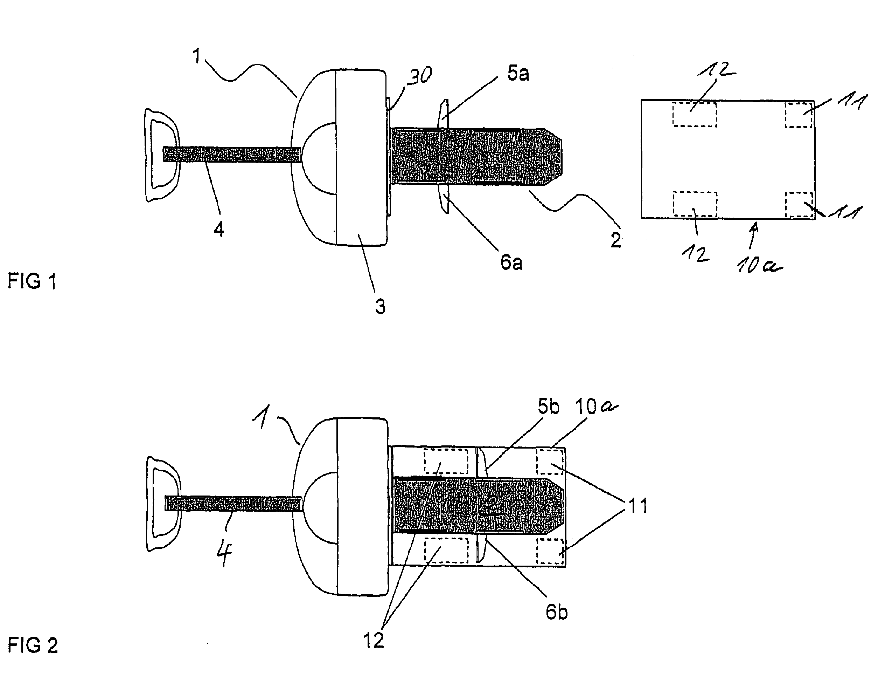

Für die Figuren 1 und 2 ist ein Flurförderzeug 1 gezeigt, das von einer Deichsel 4 bedienbar ist. Ein Lastteil des Flurförderzeugs 1 weist mittig einen relativ breiten Lastarm 2 sowie einen Rücken 30 auf, der mittels einer geeigneten Hubvorrichtung in der Höhe verstellbar ist. Dies ist allgemein bekannt. In Figur 1 ist eine Palette 10a auf den Boden aufstehend dargestellt, die in Figur 2 vom Lastarm 2 aufgenommen ist. Aus Darstellungsgründen ist die Palette 10a als durchsichtig angenommen.

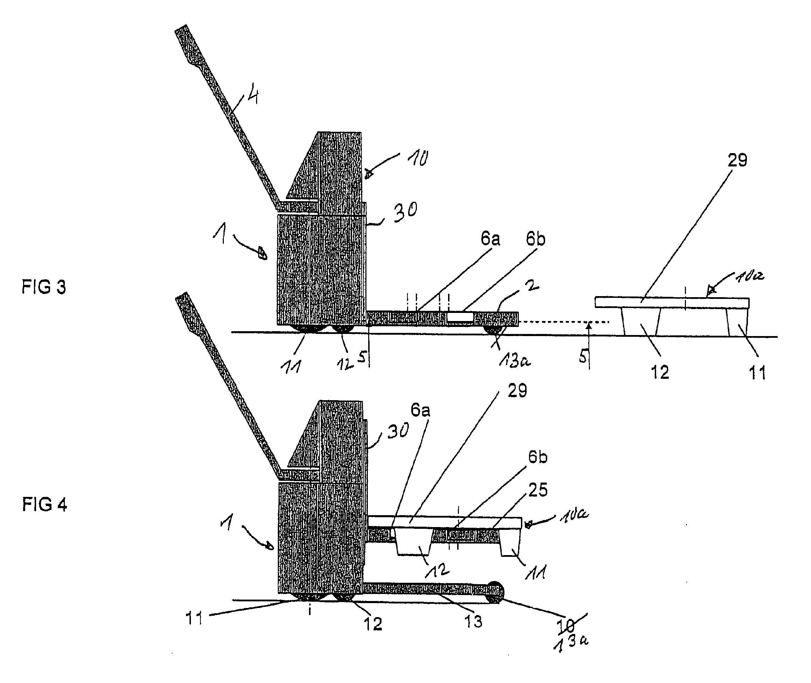

In Figur 3 ist die Anordnung nach Figur 1 in Seitenansicht dargestellt. Die Ladefläche der Palette 10a ist mit 29 bezeichnet. Man erkennt außerdem, dass das Flurförderzeug 1 ein Antriebsrad 11 aufweist, sowie zwei seitlich neben dem Antriebsrad 11 angeordnete Stützrollen 12, wobei jedoch nur eine dargestellt ist.

In Figur 4 ist die seitliche Ansicht gemäß Figur 2 dargestellt, wobei der Lastarm 2 angehoben ist. Man erkennt in Figur 4 auch einen Radarm 13 mit einem Lastrad 13a.

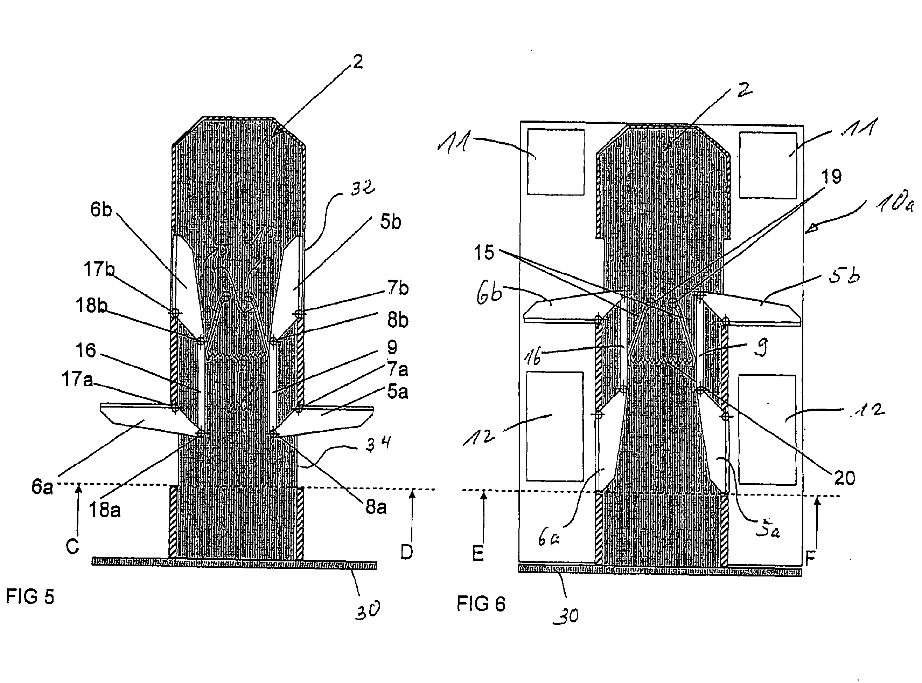

In Figuren 5 und 6 ist der Lastarm 2 einmal ohne und einmal mit aufgenommener Palette dargestellt. Dies entspricht dem Schnitt nach Figur 3 entlang der Linie 5-5. Man erkennt aus den Figuren 5 und 6, dass unterhalb der Deckenfläche des Lastarms, dessen Profil U-förmig ist, auf jeder Längsseite des Lastarms 2 ein Paar flügelförmige Elemente 6a, 6b bzw. 5a, 5b an Anlenkpunkten 17a, 17b bzw. 7a bzw. 7b schwenkbar gelagert sind. Die Lagerung erfolgt über eine vertikale, d.h. senkrecht zur Deckenfläche des Lastarms 2 stehende Achse. Am inneren Hebelarm der Elemente 6a, 6b, 5a, 5b ist eine Lenkerstange 16 bzw. 9 angelenkt. Die Anlenkung der Lenkerstangen 16, 9 ist derart, dass bei einer vollständig ausgeschwenkten Position der Elemente 5a, 6a die anderen gegenüberliegenden Elemente 6b, 5b vollständig unterhalb der Deckenfläche des Lastarms 2 liegen. Die Schenkel des U-Profils des Lastarms 2 haben entsprechende Öffnungen 32 bzw. 34, über welche sich die Elemente in das Profil des Lastarms hinein oder aus diesen herausbewegen können. Zwischen den Elementen sind zwei Schwenkarme 15 um Schwenkpunkte 19 schwenkbar gelagert. Zwischen diesen ist eine Druckfeder 20 angeordnet, welche die Schwenkarme bzw. deren Enden in Anlage an die Lenkerstangen 16, 9 bringt. Die Anlenkung der Lenkerstangen 16, 9 an die Elemente ist in Figur 5 mit 18a, 18b bzw. 8a, 8b bezeichnet.

Aus den Darstellungen in den vorgenannten Figuren geht hervor, dass bei einer Verschwenkung der gegenüberliegenden Abstützelemente aus einer Außenposition etwa gemäß Figur 5 oder Figur 6 in eine Ruheposition die anderen Elemente auf der Längsseite des Lastarms 2 ihrerseits in die Außenposition gebracht werden und vollständig ausgefahren sind, wenn die eingefahrenen Elemente in der Ruheposition sind. In der Figur 5 sind die Elemente 5a, 6a in der Außenposition und die anderen Elemente 5b, 6b in der Ruheposition. Die Betätigung der Elemente erfolgt durch die Füße 11 bzw. 12 der Palette. In der Darstellung nach den Figuren 1 bzw. 3 bzw. 5 sind bei nicht aufgenommener Last die Elemente 5a, 6a in der Außenposition und die Elemente 5b, 6b in der eingefahrenen Position. Fährt der Lastarm 2 unter die Palette 10a, werden die Elemente 5a, 6a von den Füßen 12 in die Ruheposition verschwenkt und gleichzeitig verschwenken die Elemente 5b, 6b in eine Abstützposition, wie in Figur 2 bzw. Figur 4 bzw. Fig. 6 dargestellt ist. Umgekehrt werden die "Abstützelemente" 5b, 6b in die Ruheposition verstellt und die Elemente 5a, 6a wieder in die Außenposition, wenn der Lastarm 2 unter der Palette 10a herausgezogen wird.

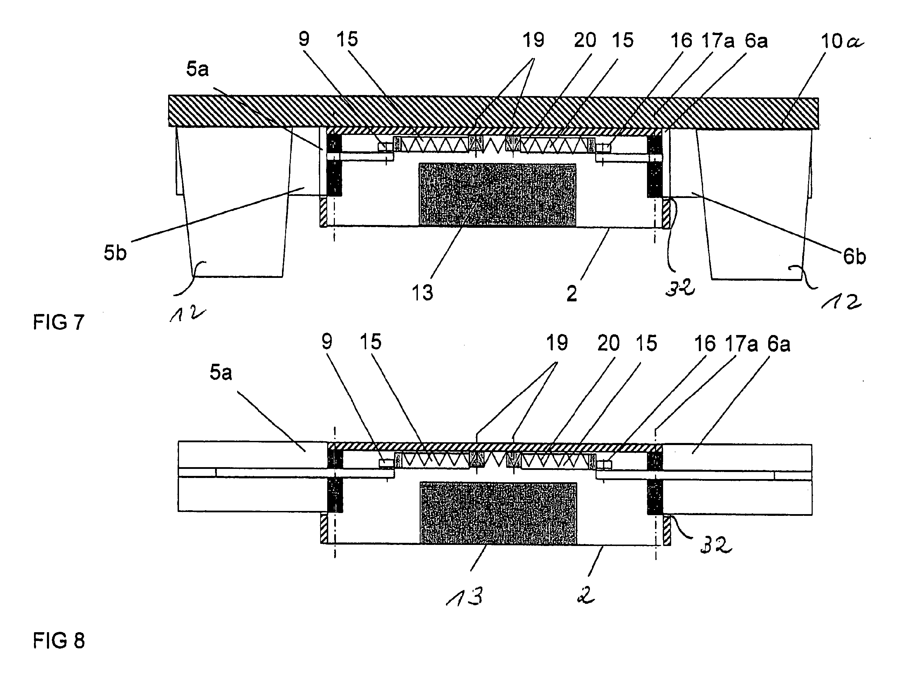

Man erkennt, dass zumindest die Elemente 5b, 6b relativ nahe unterhalb der Oberseite des Lastarms 2 liegen, sodass eine wirksame Abstützung gewährleistet ist, wenn sie in der Abstützposition sind. Sie können sogar gemäß den Figuren 7 und 8 bis an die Oberseite der Deckenfläche reichen, wenn die Öffnungen 32, 34 in dem Lastarm und die Elemente entsprechend gestaltet sind.

Aus den Figuren 7 und 8 ist in anderer Perspektive die Anordnung der Elemente und ihre Federbeaufschlagung, auch relativ zum Radarm 13 dargestellt.

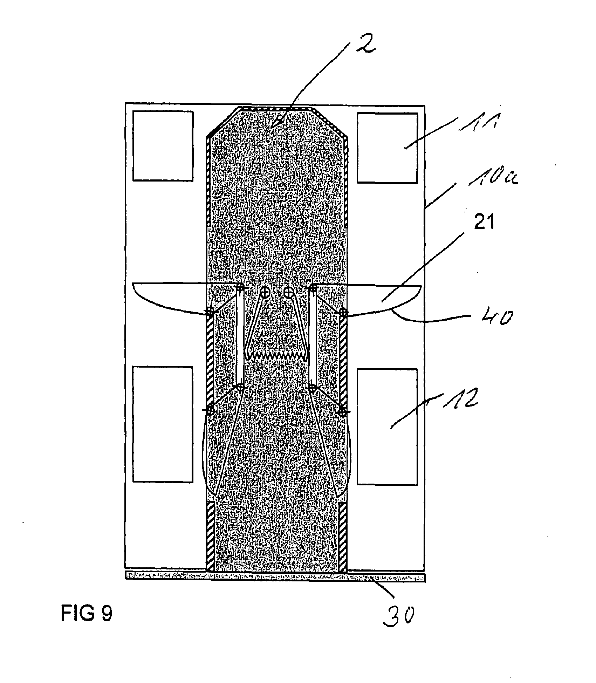

In Figur 9, die im Wesentlichen der Darstellung nach Figur 6 gleicht, sind lediglich Elemente 21 in ihrer Kontur etwas anders geformt als die Elemente in den voranstehenden Figuren, indem die Elemente 21 an der Außenseite bei 40 eine konvexe Form haben. Dadurch können sie leichter an den Füßen 11 bzw. 12 entlang gleiten und betätigt werden, insbesondere wenn beim Einfädeln des Lastarms 2 in die Palette ein Abstützelement nicht vollständig unterhalb des Lastarms 2 eingeschwenkt ist.

Die Elemente 5a, 6a können auch einfacher ausgeführt sein, da sie lediglich zur Betätigung der Elemente 5b, 6b dienen und keine Abstützfunktion haben. Sie sind nur bei unbeladenem Fahrzeug in einer Außenposition.

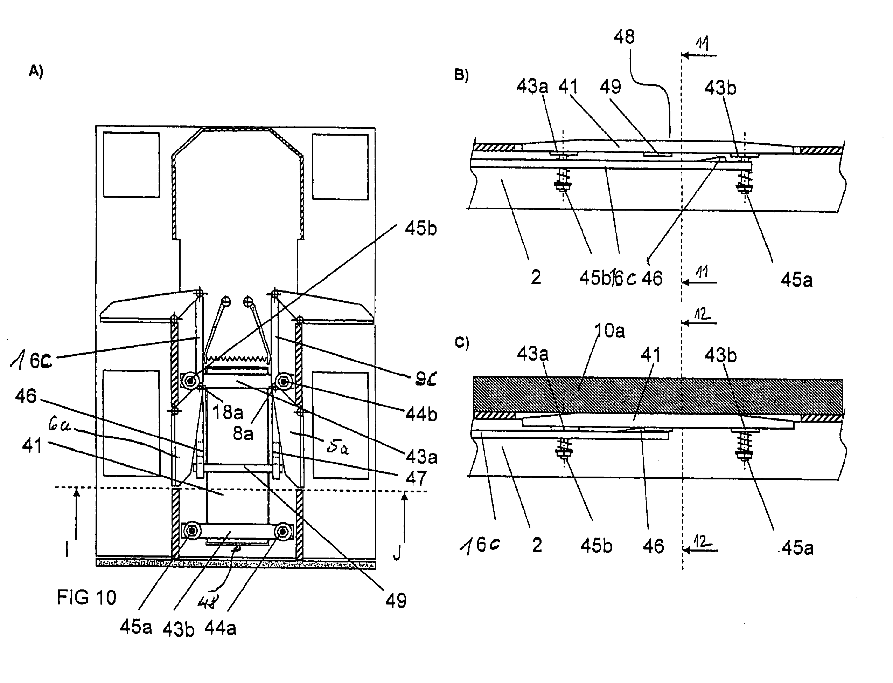

Figur 10a zeigt einen Schnitt durch den Lastarm analog zu den Figuren 5, 6, 9 mit dem Unterschied, dass der Lastarm in dieser Darstellung mit einer Verriegelung für die Elemente ausgerüstet ist. Das Deckblech weist eine beispielsweise rechteckige Öffnung auf, die von der Haube 41 des Betätigungselements 48 nahezu geschlossen wird. An der Unterseite der Haube 41 sind Querstreben 43a, 43b und 49 befestigt. Diese werden mit Hilfe der Federelemente 44a, 44b, 45a, 45b von unten an das Deckblech gedrückt, sodass die Oberseite der Haube 41 um einen bestimmten Betrag aus der Deckfläche herausragt. Die Lenker 16c, 9c besitzen Verlängerungen, die über die Gelenkpunkte 8a, 18a in Richtung zum Lastarmrücken hinausragen. An der Oberseite der Verlängerungen sind die "Rastnasen" 46, 47 ausgebildet.

Figur 10b zeigt einen Längsschnitt durch den Lastarm nach Figur 10a im Bereich des Betätigungselements 48, wobei die Elemente 5a, 6a zur Vereinfachung weggelassen sind. Der Lastarm ist unbeladen und die Elemente 5b, 6b befinden sich in der eingeklappten Ruheposition und die Lenker 6a, 19a sind in der Darstellung in ihrer rechten Endlage in Richtung Lastarmrücken, der rechts außerhalb der Figur liegt. Die Rastnabe 46 liegt unterhalb der Querstreben 43a, 43b, 49 und kann sich somit frei bewegen. Vorder- und Rückseite der Haube 41 sind angeschrägt.

Figur 10c zeigt den gleichen Schnitt, jedoch bei aufgenommener Palette 10a. Durch das Einfahren in die Palette wurden die Elemente 5b, 6b mit Hilfe der Elemente 5a, 6a und der Lenker 16c, 9c in eine Abstützposition geschwenkt. Der Lenker 6c hat sich gegenüber Figur 10b entsprechend nach links verschoben. Beim Anheben des Lastarms kommt die Palette 10a auf dem Deckblech des Lastarms 2 zur Anlage und drückt das Betätigungselement 48 gegen die Kraft der Federelemente 44a, 44b, 45a, 45b nach unten, bis dessen Oberseite mit der Oberseite des Deckblechs bündig ist. In diesem Moment tritt die Querstrebe 49 mit den Rastnasen 46, 47 in Wirkverbindung und verriegelt so eine Rückbewegung der Lenker 16c, 9c nach rechts. Hierdurch sind die Abstützelemente 5b, 6b in ihrer Abstützposition verriegelt.

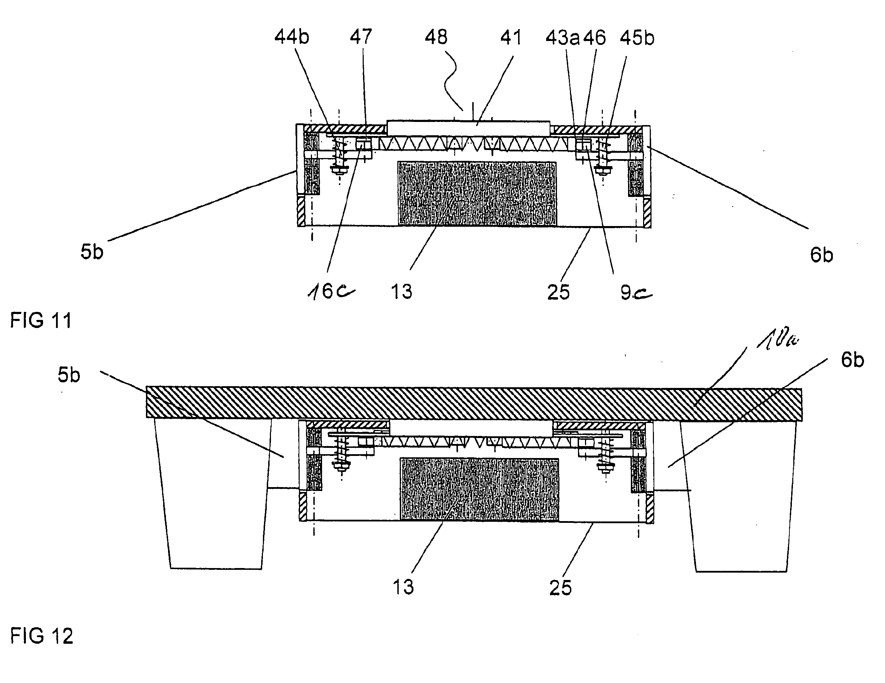

Figur 11 zeigt einen Schnitt durch den Lastarm entlang der Linie 11-11 in Figur 10a, allerdings ohne aufgenommene Palette analog zu Figur 10b, wobei die Elemente 5a, 6a zur Vereinfachung weggelassen sind. Die Federelemente 44b, 45b drücken die Querstrebe 43a nach oben gegen das Deckblech und damit ragt die Haube 41 des Betätigungselements 48 aus der Deckenoberseite heraus.

Figur 12 zeigt den gleichen Schnitt wie Figur 11, jedoch nur mit aufgenommener Palette 10a. Das Betätigungselement 48 wird beim Anheben des Lastarms durch die Palette 10a heruntergedrückt und blockiert nun über die Querstrebe 49 und die Rastnasen 46, 47 die Lenker 16c, 9c und somit die Abstützelemente 5b, 6b in ihrer Abstützposition.

## Patentansprüche

1. Flurförderzeug, bei dem ein Lastteil einen mittigen, höhenverstellbaren Lastarm oberhalb eines mittigen Radarms aufweist und der Lastarm verstellbare Mittel zu seiner Verbreiterung aufweist, wobei unterhalb der Deckenfläche des Lastarms (2) und in Längsrichtung des Lastarms (2) beabstandet an jeder Längsseite zwei flügelartige Elemente (5a, 5b, 6a, 6b) schwenkbar gelagert sind, die zwischen einer Ruheposition unterhalb der Deckenfläche und einer Außenposition, in der sie seitlich von dem Lastarm (2) abstehen, bewegbar sind, **dadurch gekennzeichnet, dass** die jeweils auf einer Längsseite liegenden Elemente (5a, 5b, 6a, 6b) über Getriebemittel so gekoppelt sind, dass bei einer Verschwenkung des Elements eines Paars in seine Außenposition das andere in die Ruheposition verschwenkt wird und umgekehrt.

2. Flurförderzeug nach Anspruch 1, **dadurch gekennzeichnet dass** die Elemente (5a, 5b, 6a, 6b) als zweiarmige Hebel um eine vertikale Achse (8a, 8b, 17a, 17b) schwenkbar gelagert sind und ein Hebelarm der Elemente über eine Lenkerstange (9, 16) gekoppelt ist.

3. Flurförderzeug nach einem der Ansprüche 1 bis 2, **dadurch gekennzeichnet dass** die Elemente eines Paares denen des anderen Paares gegenüberliegen.

4. Flurförderzeug nach einem der Ansprüche 1 bis 3, **dadurch gekennzeichnet dass** eine Federanordnung vorgesehen ist, welche die Elemente in die jeweilige Außen- bzw. Ruheposition vorspannt.

5. Flurförderzeug nach Anspruch 2 und 3, **dadurch gekennzeichnet dass** eine Druckfeder (20) zwischen den zugeordneten Lenkerstangen (9, 16) angeordnet ist.

6. Flurförderzeug nach Anspruch 5, **dadurch gekennzeichnet dass** die Druckfeder (20) zwischen einem Paar Schwenkarmen (15) angeordnet ist, die um eine vertikale Achse schwenkbar gelagert sind und an den Lenkerstangen (9, 16) anliegen.

7. Flurförderzeug nach einem der Ansprüche 1 bis 6, **dadurch gekennzeichnet dass** der Lastarm (2) im Querschnitt U-Profil aufweist und in den Schenkeln des U-Profils Öffnungen (32, 34) geformt sind, für das Ein- und Ausschwenken der Elemente (5a, 5b, 6a, 6b).

8. Flurförderzeug nach einem der Ansprüche 1 bis 7, **dadurch gekennzeichnet dass** die Elemente (21) eine konvexe Außenseite (40) aufweisen.

9. Flurförderzeug nach einem der Ansprüche 1 bis 8, **dadurch gekennzeichnet dass** Verriegelungsmittel für die Getriebemittel vorgesehen sind mit einem Betätigungselement, das in der Deckfläche des Lastarms (2) beweglich gelagert und etwas nach oben ragt, und das mit einem Verriegelungselement gekoppelt ist, derart, dass das Verriegelungselement die Getriebemittel blockiert, wenn das Betätigungselement nach unten gedrückt wird.

10. System aus Flurförderzeug und Palette, wobei ein Lastteil einen mittigen, höhenverstellbaren Lastarm oberhalb eines mittigen Radarms aufweist, unterhalb der Deckenfläche des Lastarms (2) und in Längsrichtung des Lastarms beabstandet an jeder Seite zwei flügelartige Elemente (5a, 5b, 6a, 6b) schwenkbar gelagert sind, die zwischen einer Ruheposition unterhalb der Deckenfläche und einer Außenposition, in der sie seitlich von dem Lastarm (2) abstehen, bewegbar sind und die jeweils auf einer Längsseite liegenden Elemente über Getriebemittel so gekoppelt sind, dass bei einer Verschwenkung des Elements eines Paares in seiner Außenposition das andere in die Ruheposition verschwenkt wird und umgekehrt und die Palette (10a) vier im Rechteck angeordnete Füße (11, 12) aufweist und der Abstand der Elemente so gewählt ist, dass bei unter die Palette (10a) gefahrenem Lastarm zwei gegenüberliegende Elemente in den Zwischenraum zwischen den Füßen (11, 12) schwenken können, während die anderen gegenüberliegenden Elemente in der Ruheposition sind.

11. System nach Anspruch 10, **dadurch gekennzeichnet, dass** der Abstand zwischen den Elementen (5a, 5b, 6a, 6b) mindestens etwas größer ist als die größte Länge eines Palettenfußes (11, 12).

## Claims

1. An industrial truck, wherein a load part has a central, height-adjustable load arm above a central wheel arm, and the load arm has adjustable means for its enlargement, wherein two wing-like elements (5a, 5b, 6a, 6b) are swingably mounted at each longitudinal side below the top surface of the load arm (2) and spaced apart in the longitudinal direction of the load arm (2), said elements being movable between a rest position below the top surface and an outside position in which they laterally project from the load arm (2), **characterised in that** the respective elements (5a, 5b, 6a, 6b) situated at one longitudinal side are coupled by gearing means such that upon swinging an element of a pair into its outside position, the other one is swivelled into the rest position and vice versa.

2. The industrial truck according to claim 1, **characterised in that** the elements (5a, 5b, 6a, 6b) are swingably mounted around a vertical axis (8a, 8, 17a, 17b) as two-arm levers, and one lever arm of the elements is coupled via a steering rod (9, 16).

3. An industrial truck according to any one of claims 1 to 2, **characterised in that** the elements of one pair face the elements of the other pair.

4. An industrial truck according to any one of claims 1 to 3, **characterised in that** a spring arrangement is provided which biases the elements into the respective outside or rest position.

5. An industrial truck according to claim 2 and 3, **characterised in that** a compression spring (20) is mounted between the associated steering rods (9, 16).

6. The industrial truck according to claim 5, **characterised in that** the compression spring (20) is disposed between a pair of swinging arms (15), which are swingably mounted around a vertical axis and sit close to the steering rods (9, 16).

7. An industrial truck according to any one of claims I to 6, **characterised in that** the load arm (2) has a U-shaped profile in the cross section, and that openings (32, 34) are formed in the legs of the U-profile for swinging the elements (5a, 5b, 6a, 6b) in and out.

8. An industrial truck according to any one of claims 1 to 7, charactcriscd in that the elements (21) have a convex outer side (40).

9. An industrial truck according to any one of claims 1 to 8, **characterised in that** locking means are provided for the gearing means, with an actuation element which is movably mounted in the top surface of the load arm (2) and projects somewhat upward, and which is coupled to a locking element such that the locking element blocks the gearing means when the actuation element is pressed downward.

10. A system of industrial truck and palette, wherein a load part has a central, height-adjustable load arm above a central wheel arm, two wing-like elements (5a, 5b) are swingably mounted at each longitudinal side below the top surface of the load arm (2) and spaced apart in the longitudinal direction of the load arm (2), said elements being movable between a rest position below the top surface and an outside position in which they laterally project from the load arm (2), **characterised in that** the respective elements (5a, 5b, 6a, 6b) situated at one longitudinal side are coupled by gearing means such that upon swinging an element of a pair into its outside position, the other one is swivelled into the rest position and vice versa, and the palette (10a) has four feet (11, 12) disposed in a rectangle, and the distance of the elements is selected such that when the load arm is moved below the palette (10a), two opposite elements can swing into the gap between the feet (11, 12), while the other, opposite elements are in the rest position.

11. The system according to claim 10, **characterised in that** the distance between the elements (5a, 5b, 6a, 6b) is at least somewhat greater than the greatest length of a palette foot (11, 12).

## Revendications

1. Chariot de manutention, dans lequel une partie de charge a un bras de charge central ajustable en hauteur au-dessus d'un bras de roue central, et le bras de charge a des moyens ajustables pour son élargissement, deux éléments (5a, 5b, 6a, 6b) en forme d'ailette étant montés de façon pivotante au-dessous de la surface de plafond du bras de charge (2) et espacés dans la direction longitudinale du bras de charge (2) sur chaque coté longitudinal, qui sont mobiles entre une position de repos au-dessous de la surface de plafond et une position extérieure dans laquelle ils projètent du bras de charge (2) sur le côté, **caractérisé en ce que** les éléments (5a, 5b, 6a, 6b) respectifs situés sur un côté longitudinal sont couplés par des moyens d'engrenage de sorte que dans le balayage d' un élément d'une paire vers sa position extérieure, l'autre est pivoté dans la position de repos et vice versa.

2. Chariot de manutention selon la revendication 1, **caractérisé en ce que** les éléments (5a, 5b, 6a, 6b) sont montés de façon pivotante autour d'un axe vertical (8a, 8, 17a, 17b) comme des leviers à deux bras et un bras de levier des éléments est couplé à travers une barre de direction (9, 16).

3. Chariot de manutention selon l'une quelconque des revendications 1 à 2, **caractérisé en ce que** les éléments d'une paire sont vis-à-vis de ceux de l'autre paire.

4. Chariot de manutention selon l'une quelconque des revendications 1 à 3, **caractérisé en ce qu'**un arrangement de ressort est prévu qui précontraint les éléments vers la position extérieure ou respectivement de repos.

5. Chariot de manutention selon la revendication 2 et 3, **caractérisé en ce que** un ressort de compression (20) est monté entre les barres de direction (9, 16) associées.

6. Chariot de manutention selon la revendication 5, **caractérisé en ce que** le ressort de compression (20) est disposé entre une paire de bras pivotants (15), qui sont montés de façon pivotante autour d'un axe vertical et qui portent bien aux barres de direction (9, 16).

7. Chariot de manutention selon l'une quelconque des revendications 1 à 6, **caractérisé en ce que** le bras de charge (2) a un profil en U dans sa section transversale, et des ouvertures (32, 34) sont formées dans les jambes du profil en U pour pivoter les éléments (5a, 5b, 6a, 6b) vers dehors et vers dedans.

8. Chariot de manutention selon l'une quelconque des revendications 1 à 7, **caractérisé en ce que** les éléments (21) ont un côté extérieur convexe (40).

9. Chariot de manutention selon l'une quelconque des revendications 1 à 8, **caractérisé en ce que** des moyens de verrouillage sont prévus pour les moyens d'engrenage, avec un élément de commande qui est monté de façon mobile dans la surface de plafond du bras de charge (2) et projette un peu vers le haut et est accouplé à un élément de verrouillage de sorte que l'élément de verrouillage bloque les moyens d'engrenage quand l'élément de commande est pressé vers le bas.

10. Système de chariot de manutention et palette, dans lequel une partie de charge a un bras de charge central ajustable en hauteur au-dessus d'un bras de roue central, deux éléments (5a, 5b, 6a, 6b) en forme d'ailette étant montés de façon pivotante sur chaque coté au-dessous de la surface de plafond du bras de charge (2) et espacés dans la direction longitudinale du bras de charge (2), qui sont mobiles entre une position de repos au-dessous
de la surface de plafond et une position extérieure dans laquelle ils projètent du bras de charge (2) sur le côté, et les éléments (5a, 5b, 6a, 6b) respectifs situés sur un côté longitudinal sont couples par des moyens d'engrenage de sorte que dans le balayage d' un élément d'une paire vers sa position extérieure, l'autre est pivoté vers la position de repos et vice versa, et la palette (10a) a quatre pieds (11, 12) disposés en carré et l'écart des éléments est choisi de sorte que chez bras de charge poussé au-dessous de la palette (10a), deux éléments opposés peuvent pivoter au dedans de l'interstice entre les pieds (11, 12), pendant que les autres éléments opposés sont dans la position de repos.

11. Système selon la revendication 10, **caractérisé en ce que** l'écart entre les éléments (5a, 5b, 6a, 6b) est au moins un peu plus grand que la longueur plus grande d'un pied de palette (11, 12).
